# EUROPEAN PATENT APPLICATION

(11) **EP 4 606 875 A1**
(43) Date of publication of application: **27.08.2025**
(21) Application number: 24159769.9
(22) Date of filing: 26.02.2024
(51) Int. Cl.: C10G 9/24, C10G 9/20, B01J 19/00, B01J 19/24, F27D 99/00

(54) **INDUSTRIAL FURNACE AND METHOD FOR PERFORMING INDUSTRIAL PROCESSES**

(71) Applicant: Hyperheat GmbH, 77656 Offenburg (DE)
(72) Inventor: AMSBECK, Lars, 87000 Strasbourg (FR)
(74) Representative: DTS Patent- und Rechtsanwälte PartmbB

(57) **Abstract**

The present invention relates to an industrial furnace (100), comprising:
a heating vessel (102), in particular a tubular reactor, configured to absorb thermal radiation and to get heated for facilitating an industrial process, and
an electrical heating device (104) configured to generate a high-temperature gas stream for heating the heating vessel (102).

Further, the present invention relates to a method (200) for performing an industrial process, in particular using the industrial furnace (100).

## Description

The present invention relates to an industrial furnace, in particular a sustainable industrial furnace, and a method for performing an industrial process.

Industrial furnaces, exemplified by the steam cracking furnace in the petrochemical industry, are intricate systems designed for efficient thermal processing. In a typical steam cracking furnace, a tubular reactor is employed to convert hydrocarbons into valuable products like ethylene and propylene.

In the radiant section of the furnace, e.g. the tubular reactor, often consisting of radiant coils (e.g. coiled or straight tubes) made of high-temperature alloys, is exposed to intense flames generated by burners. The feedstock undergoes thermal cracking in the tubular reactor, absorbing radiant heat, and then moves through the conversion section of the furnace. The conversion section facilitates the transformation of larger hydrocarbons into valuable products.

To enhance efficiency, some steam cracking furnaces include a preheating mechanism using flue gas. The flue gas, a byproduct of the combustion process, can be directed to a heat exchanger known as an economizer. In the economizer, the flue gas transfers its thermal energy to the incoming feedstock or other process streams, preheating them before entering the radiant section.

Additionally, the combustion of hydrocarbons in the presence of air can result in the production of pollutants such as carbon monoxide (CO), carbon dioxide (CO2) and nitrogen oxides (NOx). Managing these emissions becomes crucial for environmental compliance, often requiring additional control measures. The strong need to address climate change and reduce the carbon footprint has made CO₂ emissions a crucial factor in the move towards cleaner, renewable energy sources.

It is therefore an object of the present invention to address the drawbacks of the conventional furnace by utilizing heating sources generated from renewable energy, such as electricity.

In particular, this object is achieved by an industrial furnace according to claim 1.

In particular, the industrial furnace comprises:
- a heating vessel, in particular a tubular reactor, configured to absorb thermal radiation and to get heated for facilitating an industrial process at elevated temperatures, and
- an electrical heating device configured to generate a high-temperature gas stream, preferably ranging from 1000 to 2500 °C, for heating the heating vessel.

Advantageously, the use of an electrical heating device in the furnace of the present invention facilitates the production of a precise and easily adjustable heat output, providing precise control over temperatures in diverse applications. Additionally, electrical heating device can produce elevated temperatures relevant for industrial process in a more environmentally friendly way, producing minimal emissions compared to the combustion process of flame burners. The furnace also eliminates the risk of combustion by-products, such as NOx and CO, contributing to improved air quality and reduced environmental impact. Moreover, the electrical heating devices are inherently safer as they do not involve an open flame, reducing the risk of accidents and making them suitable for use in enclosed or sensitive environments.

In particular, the industrial furnace for example includes a steam cracker (a steam cracking furnace), steam generator, preheating furnace in the metal industry for forging, hot rolling or the like, melting furnace, heat treatment furnace, rotary kiln for example for clinker production, a glass furnace or a tunnel furnace for ceramic production.

In particular, the furnace further comprises a radiant chamber, wherein the electrical heating device is configured to be disposed either inside or outside of the radiant chamber.

In particular, the electrical heating device can be either external to the radiant chamber (disposed outside of the radiant chamber) or integrated (included) in the radiant chamber.

For example, the electrical heating device is designed as an external unit and is configured to be connected to the radiant chamber using any suitable tubing elements. Alternatively, the electrical heating device is designed as an internal unit which is configured to be disposed within the radiant chamber.

In particular, the electrical heating device is configured to be disposed inside the radiant chamber, wherein the electrical heating device comprises heating elements that are configured to be attached to (mounted onto) an inner periphery wall of the radiant chamber. The heating elements of the electrical heating device are configured to heat a cold gas stream passing through them.

For example, the radiant chamber comprises openings for guiding (for the passage of) a cold gas stream into the radiant chamber.

In particular, the furnace is configured to guide the high-temperature gas stream (heated using the heating elements within the radiant chamber) into other section (e.g. a chagrining unit) for heating or pre-heating chemical processes as appropriate.

In particular, the furnace further comprises a radiating unit that is configured to absorb heat from the high-temperature gas stream (that is produced by the electrical heating device) and to emit thermal radiation for heating the heating vessel.

Advantageously, the provision of the radiating unit further enhances heat transfer to the heating vessel and minimizes heat loss to the surrounding environment. Through the emission of heat directly from a heated surface of the radiating unit to the heating vessel within the furnace, a uniform heating across the surfaces and heating vessel is provided. This potentially results in an efficient and even temperature distribution in the furnace. Additionally, elevated temperatures required for the industrial process can be achieved more effectively by the radiant heat.

In particular, the furnace further comprises a recirculation conduit (a recirculating tube) that is configured to redirect a portion (e.g. 40% or 50% or 60%) of the high-temperate gas stream back to the electrical heating device, e.g. facilitating an intermediate circulation loop for the heated gas.

Preferably, another portion of the high-temperature gas stream is configured to be guided to a charging unit (a charging section) of the furnace, e.g. to a pre-heating unit disposed in the charging section.

In particular, the recirculation conduit is fluidly connected to the furnace, i.e. at an intermediate position between the radiant chamber and the charging unit of the furnace.

The provision of the recirculation conduit advantageously causes the reduction of the maximum temperature needed. This is because the radiating unit (e.g. a radiating wall) can achieve the same heat flux at lower temperatures due to its ability to effectively radiate across the entire heat spectrum. This radiation characteristics cannot be achieved by solely utilizing the (high-temperature) gas stream.

In particular, the electrical heating device comprises a heating unit configured to generate an outlet temperature of 600 to 2800°C.

In particular, the electrical heating device or the heating unit comprises heating elements, for example, comprising electrically conductive oxide ceramics with a negative temperature coefficient.

In particular, the furnace further comprises a radiant chamber configured to accommodate (or house) the heating vessel and the radiating unit therein, wherein the radiant chamber is configured to define an intermediate chamber (a distribution chamber) that is disposed between the heating vessel and the radiating unit.

In particular, the furnace further comprises tubing elements configured to direct the high-temperature gas stream from the electric heating device into the radiant chamber.

In particular, the radiant chamber comprises openings through which the high-temperature gas stream flows into the intermediate chamber.

In particular, the tubing elements are fluidly coupled to into the openings of the radiant chamber, facilitating the flow of the high-temperature gas stream into the radiant chamber.

In particular, the furnace further comprises mounting elements configured to mount the radiating unit onto an inner periphery wall of the radiant chamber.

In particular, the radiating unit is disposed at a distance from the inner periphery wall of the radiant chamber and is arranged around the heating vessel (e.g. surrounding the heating vessel).

In particular, the furnace further comprises a heat storage unit configured to store the heat generated by the high-temperature gas stream, preferably the heat storage unit is disposed upstream from the radiant chamber.

In particular, the electrical heating device is disposed upstream from a heating storage unit. For example, the electrical heating device is external to the radiant chamber and is fluidly connected to the radiant chamber.

In particular, the furnace is configured to direct the high-temperature gas produced by the electrical heating device through the heat storage unit and into the radiant chamber for heating the radiating unit.

In particular, the furnace comprises a dust injection unit configured to introduce dust powders or particles into the high-temperature gas stream.

Advantageously, the particles, e.g. ceramic particles with specific thermal properties help to regulate temperature gradients within the furnace, influencing heat distribution and heat content and potentially promoting uniformity in the industrial process.

In particular, the dust injection unit is coupled to the heating vessel.

In particular, the particles comprise ceramic particles in the range of 0.01 to 0.1 mm or smaller.

In particular, an outlet of the dust injection unit is positioned in close proximity to an outer wall of the heating vessel or a central hollow chamber delineated by a housing of the reactor vessel.

In particular, the heating vessel (e.g. a tubular furnace or a rotary furnace) comprises a hollow chamber for the passage of the high-temperature gas stream and the dust injection unit is configured to introduce the particles at an inlet end of the hollow chamber.

The hollow chamber, for example, is centrally defined in the tubular furnace. This central hollow chamber allows hot gases or air to flow through the central axis of the heating vessel. This, in turn, improves heat transfer.

In particular, the high-temperature gas stream comprise air, or a mixture of air with CO₂ and/or H₂O, or a mixture of inert gases. Preferably, the mixture of inert gases may include CO₂ and/or H₂O, or may be free of CO₂ and/or H₂O.

Advantageously, by introducing, for example water or carbon dioxide, the enthalpy of the high-temperature gas stream is improved. Depending on the industrial processes, other suitable components or gases can be introduced in the gas stream (e.g. air) to increase the total heat content of the gas stream.

In particular, it is further envisaged that in cases where an inert atmosphere is necessary for the industrial process, the oxygen content of the air to be diminished or eliminated by combusting a specific quantity of fuel until the oxygen content in the loop gas reaches a sufficiently low level.

In particular, the furnace may comprise a closed loop for introducing water, CO₂, or additional gases into the air.

In particular, the radiating unit comprises a structured porous material (or a porous structure) configured to allow the passage of the high-temperature gas stream, preferably the porous structure comprises a ceramic foam or a ceramic honeycomb material.

Advantageously, the open-cell structure of ceramic foams allows for high permeability, enabling a reliable passage of the high-temperature gas stream, while enchanting the gas interaction. The ceramic foams further provide effective thermal insulation due to their high porosity, limiting heat conduction.

Examples of the ceramic foams include zirconia ceramic foams, alumina ceramic foams and silicon carbide ceramic foams.

Advantageously, the structured pattern of ceramic honeycombs allows for controlled flow of the gas stream (or fluid flow), making them advantageous for exchanging heats and precise fluid dynamics. The structured cells of ceramic honeycombs contribute to efficient heat transfer, enhancing the overall thermal radiation characteristics. In addition, the ceramic honeycombs offer excellent structural integrity due to the enclosed walls of the honeycomb cells. This, in turn, enhances their stability at elevated temperatures within the furnace.

Examples of the ceramic honeycombs include alumina ceramic honeycombs, mullite ceramic honeycombs, and zirconia ceramic honeycombs.

In particular, the radiating unit comprises a wall structure configured to get heated by the high-temperature gas stream flowing along either one or both sides of the wall structure, preferably the wall structure comprises refractory materials.

In particular, the radiating unit comprises a tubular (cylindrical) structure configured to get heated by the passage of the high-temperature gas stream through the tubular the tubular structure and/or around its exterior.

In particular, the tubular structure comprises for example, stainless steel, refractory metals or any suitable material.

The present invention further comprises for a method for performing an industrial process, in particular using the industrial furnace described above. The method comprises the steps of:
- providing an industrial furnace according to any one of the preceding claims, wherein the furnace is configured to generate a high-temperature gas stream using an electrical heating device;
- introducing a feedstock into said furnace;
- subjecting said feedstock to a high-temperature industrial process, in particular a thermal cracking process; and
- controlling the operational parameters of said furnace to sustain the desired high temperatures required for the industrial process.

In particular, the heating device configured to heat the gas to temperature ranging from 600 to 2600 °C.

In particular, the method further comprises the step of storing heat energy generated by the heating device in a heat storage unit.

In particular, the method further comprises the step of pre-heating the feedstock prior introducing the same into the furnace.

The figures show:
- **Fig. 1**: a schematic representation of an industrial furnace according to the present invention;
- **Fig. 2**: a schematic view of a portion of the industrial furnace, indicating a portion of a radiating unit;
- **Fig. 3**: a schematic view of a portion of the industrial furnace, indicating a heating vessel and a dust injection unit;
- **Fig. 4**: another schematic representation of an industrial furnace according to the present invention; and
- **Fig. 5**: a flow diagram of a method for performing industrial processes.

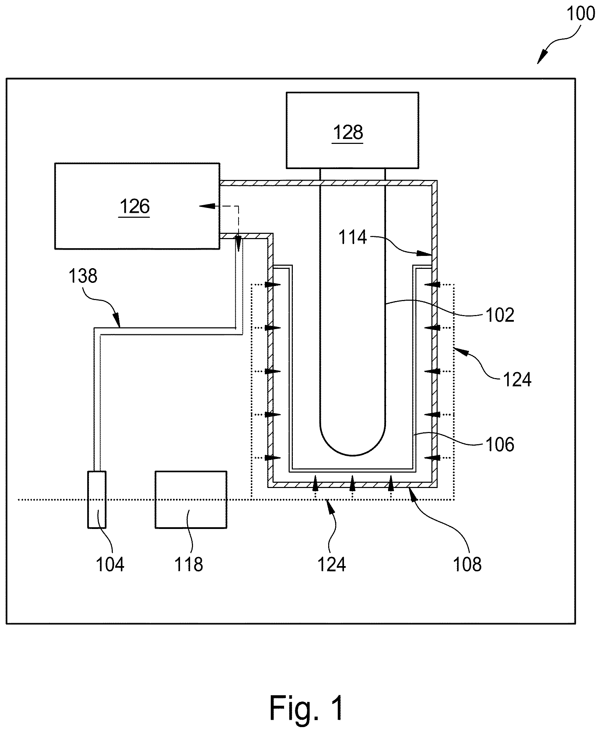

Fig. 1 illustrates a schematic view of an industrial furnace 100 including an electrical heating device which is designed as an external unit.

The furnace 100 is configured to reach and maintain high temperatures required for specific industrial processes, for example petrochemical processing (e.g. hydrocarbon cracking), cement production, or steel processing.

The furnace 100 comprises a charging unit 126 (or a feedstock inlet or a convection unit). In the charging section raw materials or feedstock, which could be solid, liquid, or gaseous, are introduced into the furnace.

The furnace 100 further comprises a radiant chamber 108 (or a main chamber) where the industrial processes or reactions, depending on the specific type of the furnace and its purpose take place.

The radiant chamber 108 is disposed downstream from the charging unit 126 of the furnace 100.

The furnace 100 may further comprises a preheating section (not shown) upstream of the actual reaction zone where the feedstock undergoes a preliminary heating process before entering the main furnace chamber 108.

Advantageously, the preheating optimizes the conditions for subsequent chemical reactions or thermal processes within the furnace.

The furnace 100 also comprises subsequent processing units 128 (e.g. transfer lines exchangers). For example, the hot gases, by-products, or treated materials exit the main chamber 108 of the furnace and are directed to subsequent processing units 128 after necessary treatments or controls.

The radiant chamber 108 is disposed between the charging unit 126 and the processing units 128 and is in fluid communication with these units.

The provision of the circulating unit advantageously resided in reducing the maximum temperature needed as the radiating unit (e.g. radiating wall or radiating unit) can achieve the same heat flux at lower temperatures as it can radiate in the full spectrum other than gas.

In Fig. 1 it is further shown that the radiant chamber 108 comprises a radiating unit 106 and a heating vessel 102.

For example, the radiating unit 106 comprises a wall or a wall structure (e.g. of refractory materials) configured to be heated by the high-temperature gas stream flowing along either one or both sides of it.

The radiating unit 106 may, alternatively or additionally, comprise a radiant tube a tubular structure heated by gas flow inside and/or on the outside.

In this example, the furnace 100 further comprises an electrical heating device 104 which is disposed outside of the radiant chamber 108.

In particular, the furnace 100 further comprises a (gas) recirculation conduit 138, e.g. an intermediate circulating tube, for circulating a portion of the gas stream 124 through the furnace 100 (i.e. in a continuous loop).

The recirculation conduit 138 is configured to guide a portion of the (heated or high-temperature) gas stream 124 from the radiant chamber 108 back to the electrical heating 1device 104 and subsequently, e.g. through a heat storage unit, into the radiant chamber 108.

In particular, an inlet of the recirculation conduit 138 is connected to the furnace 100 at a position between the radiant chamber 108 and the charging unit 126.

An outlet of the recirculation conduit is fluidly connected to the electrical heating device 104.

The recirculation conduit 138, the electrical heating device 104, optionally a heat storage unit 118, and the radiant chamber 108 are fluidly connected, thereby creating a closed circulation path or a circulating loop for the high-temperature gas flow.

In particular, a portion of the high-temperature gas stream 124 is redirected back through the electrical heating device 104 (and possibly storage unit) into the radiant chamber 108, while another portion of the gas stream 124 is configured to be guided into a pre-heating section (e.g. within the charging unit 126). This division of the gas stream is shown by arrows in Fig. 1.

That is, the furnace is configured to redirect the high-temperature gas stream 124 to the electrical heating device 104 and/or the charging unit 126 of the furnace, as appropriate. In this way, the heat of the gas stream 124 is advantageously used for pre-heating purposes and/or reducing maximum temperature required in the electrical heating device 104 (as less heating is necessary for heating the recirculated gas stream).

In this way, the (heated) fluid mass flowing into to the radiating unit 106 of the radiant chamber 108 is increased, while simultaneously the maximum temperature necessary for generating the high-temperature gas in the electrical heating device is reduced. The total enthalpy of the furnace however remains constant.

For example, the heating vessel 102 is a tubular reactor or a radiant coil or other thermal processing device.

The radiant chamber 108 is further configured to define an intermediate chamber 130 (a distribution chamber) that is positioned between the heating vessel 102 and the radiating unit 106.

For example, the radiating unit 106 is coupled to an inner periphery wall 114 of the radiant chamber 108. In particular, the radiating unit 106 is spanned on (covers) the entire inner periphery wall of the radiant chamber 108. By way of this arrangement, the heating vessel 108 is surrounded by the radiating unit (or the respective radiating element of the radiating unit) at a distance determined by the intermediate chamber 130.

The heating vessel 102 is, for example, centrally located in the radiant chamber (e.g. in parallel to the periphery wall of the radiant chamber).

The furnace 100 further comprises an electrical heating device 104.

The electrical heating device 104 is configured to heat gases using an electrical heating unit (not shown in Fig. 1).

The electrical heating unit comprises, for example, heating elements comprising conductive ceramics or conductive oxide ceramics having a negative temperature coefficient. For example, the heating elements are configured in the shape of serpentine or curved structures.

The electrical heating device 104 (i.e. the electrical heating unit or the heating elements) is configured to generate an outlet temperature of 600 to 2800 °C, preferably 1200 to 2600 °C.

The electrical heating device 104, i.e. the heating unit, is further configured to heat a gas stream 124 passing through the heating device 104, generating a high-temperature gas stream.

Also incorporated in the furnace are tubing elements (not shown in Fig. 1) that are configured to (uniformly) direct the stream of high-temperature from the heating device 104 into the radiant chamber 108.

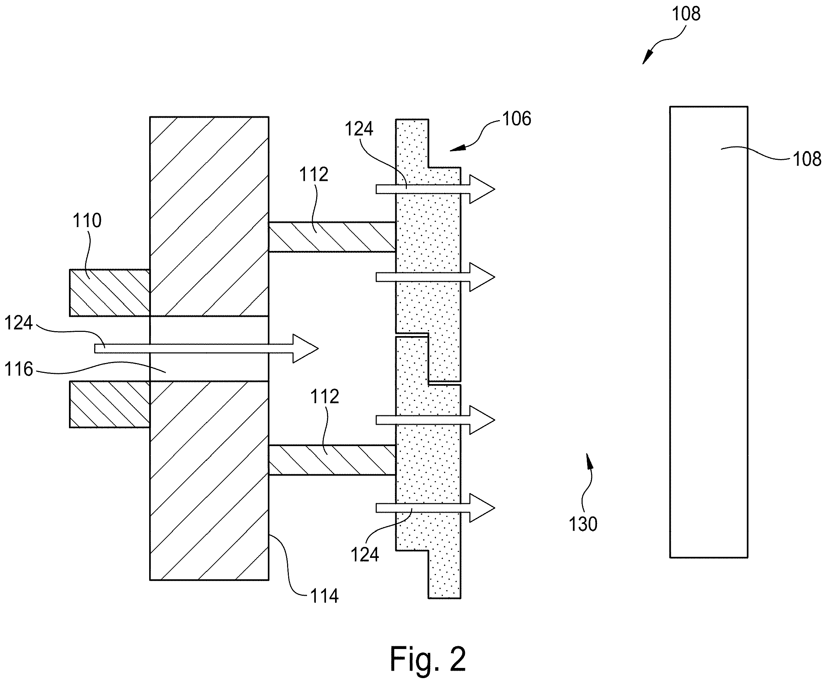

The tubing elements 110 (shown in Fig. 2) are configured to fluidly connect the electrical heating device 104 to the radiant chamber 108.

For example, the tubing elements (e.g. gas feed tubes) are attached to an outer periphery wall of the radiant chamber.

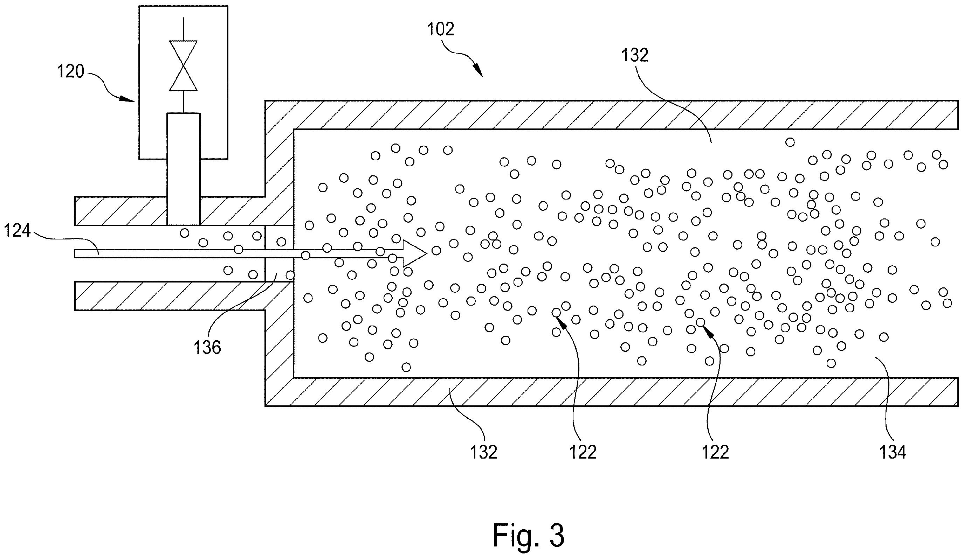

The tubing elements are connected to openings 116 (one of the openings is shown in Figs. 2 and 3) formed along the periphery of the outer wall of the radiant chamber 108.

The high-temperature gas stream 124 is configured to flow through the radiating unit 106 and enter the intermediate chamber 130 of the radiant chamber 108 before proceeding into (or passing through) the heating vessel 102.

Optionally, a storage heating unit 118 may be disposed between the electrical heating device 104 and the radiant chamber 108.

The storage heating unit serves the purpose of storing and retaining heat, for example, during periods of low energy demand or lower electricity rates.

The heating storage unit is configured to accumulate heat in specialized storage materials, such as bricks or ceramic particles.

The heating storage unit helps improve energy efficiency and contributes to cost savings and reduced environmental impact.

Fig. 2 illustrates a schematic view of a portion of the industrial furnace 100, i.e. a portion of the radiating chamber 108.

The radiating unit 106 is coupled to the wall 114 of the radiant chamber 108 through mounting elements 112. The mounting elements include any suitable mechanical method/means.

The radiating unit comprises structured porous materials, such as ceramic foams and ceramic honeycombs.

In particular, the ceramic foams are characterized by their open-cell, three-dimensional structure. The ceramic honeycombs, on the other hand, feature a structured pattern of enclosed cells, offering a balance between structural integrity and controlled fluid flow and heat transfer. Further, the surface emissivity of the ceramic material used in either porous structure can advantageously influence its ability to emit thermal radiation.

Examples of the ceramic foams include zirconia ceramic foams, alumina ceramic foams and silicon carbide ceramic foams.

Examples of the ceramic honeycombs include alumina ceramic honeycombs, mullite ceramic honeycombs, and zirconia ceramic honeycombs.

The open-cell structure of ceramic foams, while providing high porosity beneficial for fluid flow, also contribute to increased surface area. This, in turn, enhances (advantageously influences) radiative heat transfer.

The stream of high-temperature gas 124 carried by the tubing elements 110 enters via the wall opening 116 into the radiant chamber 108 and passes through the radiating unit 106, e.g. the porous structure. Thereafter, the gas flows into the intermediate chamber 130 surrounding the heating vessel 108 (e.g. a tubular reactor).

Advantageously, this arrangement and the provision of the porous materials enhances the thermal radiation within the radiant chamber 108.

Fig. 3 illustrates a schematic view of a portion of the industrial furnace 100, i.e. a portion of a heating vessel 102 and a dust injection unit 120.

The dust injection unit 120 is configured to introduce controlled quantities of particulate matter (particles) into the gas stream 124 (the high-temperature gas stream).

The dust injection unit 120 is configured to introduce particles or dusts into the high-temperature gas stream. For example, an outlet of the dust injection unit is positioned in near to the heating vessel, e.g. close to an outer wall of the heating vessel, to thereby enhance the heating of the heating vessel.

For example, the heating vessel comprises a hollow chamber or central through aperture, allowing the high-temperature gas or air to flow through the central axis of the heating vessel.

The dust injection unit is fluidly coupled to the radiant chamber 108 and/or tubing elements 110.

For example, the dust injection unit comprises a feeding mechanism for precise particles/powder delivery of specific size, a dispersal system to evenly distribute the dust, and control systems for regulating injection rates.

The introduction of solid particles, such as ceramic particles, advantageously influences the radiative heating capacity of the high temperature gas stream and improves heat flux on the target area and heating efficiency.

The size and type of particles vary widely based on the intended application, ranging from micrometer-sized dust to nanometer-sized particles.

For example, nanoparticles of various materials could be introduced for enhancing heat transfer and/or increasing the total heat content in the furnace.

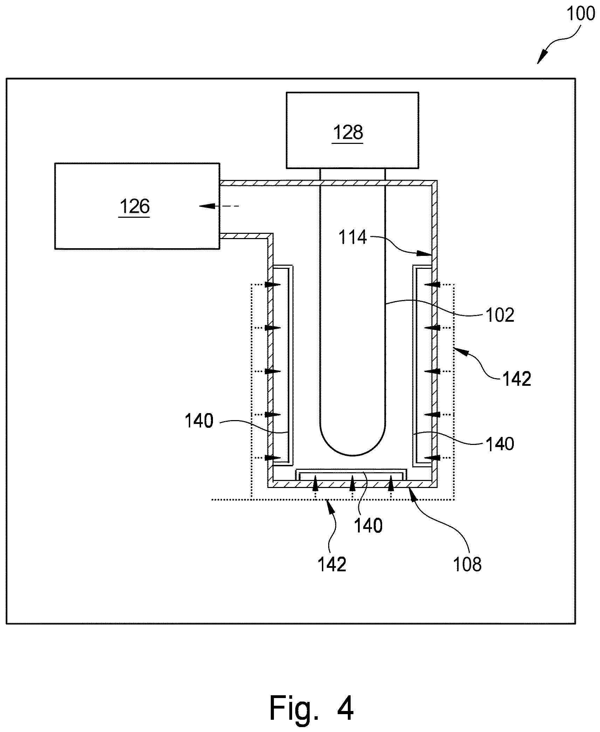

Fig. 4 illustrates a schematic view of an industrial furnace 100, indicating an electrical heating device which is designed as an internal unit.

In particular, in this example, the electrical heating device 104 is internal to the radiant chamber 108, i.e. it is disposed within the radiant chamber 108.

The heating elements 140 of the electrical heating device 104 are configured to be connected to the interior wall of the radiant chamber by way of any suitable fastening means.

The radiant chamber 108 comprises openings (or orifices) for the passage of a cold gas stream 142 into the radiant chamber. The heating elements 140 are configured to heat the cold gas stream 142 to temperatures as high as 2800°C.

In this case, the high-temperature gas stream produced by the heating elements 140 can be guided, for example, into a pre-heating unit within the charging unit 126. In this way, the electrical heating device included in the furnace 100 is advantageously used to supply heat for other chemical processes as required.

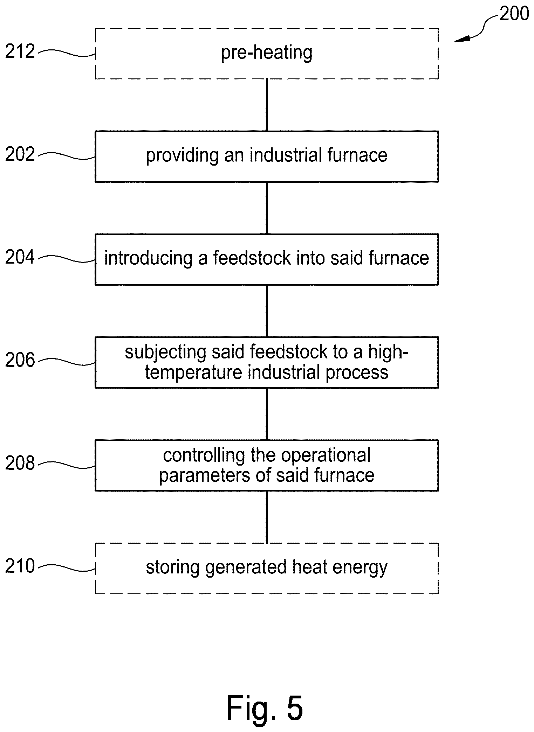

Fig. 5 illustrates a method 200 for performing industrial process, in particular using the industrial furnace 100.

The method comprises providing 202 the industrial furnace 100 and introducing 204 a feedstock into the industrial furnace 100.

The industrial furnace is configured to generate a high-temperature gas stream using the electrical heating device 104.

The method 200 further comprise subjecting 206 said feedstock to a high-temperature industrial process, such as a thermal cracking process, a calcining process, a sintering process, a glass forming process, or a heat treatment process.

The method 200 also comprises controlling 208 the operational parameters of the industrial furnace 100 to sustain the desired high temperatures required for the industrial process.

Optionally, the method 200 may further comprise the steps storing 210 heat energy generated by the heating device in the heat storage unit 120 and/or the step of pre-heating 212 the feedstock prior introducing the same into the industrial furnace. These optional method steps are shown by dotted lines in Fig. 4.

### Reference Numerals

- 100: an industrial furnace
- 102: a heating vessel
- 104: an electrical heating device
- 106: a radiating unit
- 108: a radiant chamber
- 110: tubing elements
- 112: mounting elements
- 114: an inner periphery wall of the radiant chamber
- 116: openings of the radiant chamber
- 118: a heat storage unit
- 120: a dust injection unit
- 122: dust particles
- 124: a gas stream
- 126: a charging unit
- 128: processing units
- 130: an intermediate chamber
- 132: an outer wall of the heating vessel
- 134: a hollow chamber of the heating vessel
- 136: an inlet end of the heating vessel
- 138: a recirculation conduit
- 140: heating elements
- 200: a method
- 202: a method step
- 204: a method step
- 206: a method step
- 208: a method step
- 210: a method step
- 212: a method step

## Claims

1. An industrial furnace (100) comprising:
- a heating vessel (102), in particular a tubular reactor, configured to absorb thermal radiation and to get heated for facilitating an industrial process, and
- an electrical heating device (104) configured to generate a high-temperature gas stream for heating the heating vessel (102).

2. The industrial furnace (100) according to claim 1,
**characterized in that**
the electrical heating device (104) is configured to generate an outlet temperature between 600 and 2800°C, preferably the electrical heating device (104) comprises heating elements including materials with a negative temperature coefficient.

3. The industrial furnace (100) according to any one of claims 1 or 2,
**characterized in that**
the furnace further comprises a radiant chamber (108), wherein the electrical heating device (104) is configured to be disposed either inside or outside of the radiant chamber (108).

4. The industrial furnace (100) according to claim 3,
**characterized in that**
the electrical heating device (104) is configured to be disposed inside of the radiant chamber (108),
wherein the electrical heating device comprises heating elements (140) that are configured to be attached onto an interior periphery wall of the radiant chamber (108), and wherein the heating elements (140) are configured to heat a gas stream passing therethrough.

5. The industrial furnace (100) according to claim 3,
**characterized in that**
the electrical heating device (104) is configured to be disposed outside of the radiant chamber (108), and wherein the furnace further comprises a radiating unit (106) configured to absorb heat from the high-temperature gas stream and emit thermal radiation for heating the heating vessel (102).

6. The industrial furnace (100) according to claim 5,
**characterized in that**
the radiant chamber (108) is configured to accommodate the heating vessel (102) and the radiating unit (106), wherein the radiant chamber (108) is configured to define an intermediate chamber disposed between the heating vessel (102) and the radiating unit in the radiate chamber.

7. The industrial furnace (100) according to claim 6,
**characterized in that**
the furnace further comprises tubing elements (110) configured to direct the high-temperature gas stream from the electrical heating device (104) into the radiant chamber (108), preferably the radiant chamber (108) comprises openings in fluid communication with the tubing elements (110) for the flow of the high-temperature gas stream flows into the radiant chamber (108).

8. The industrial furnace (100) according to any one of claims 6 or 7, **characterized in that**
the furnace further comprises mounting elements configured to mount the radiating unit onto an inner periphery wall (114) of the radiant chamber (108), in particular, the radiating unit (106) is disposed at a distance from the inner periphery wall of the radiant chamber (108) and is arranged around the heating vessel (102), and/or the furnace further comprises a heat storage unit (120) configured to store the heat generated by the high-temperature gas stream, preferably the heat storage unit (120) is disposed upstream from the radiant chamber (108).

9. The industrial furnace (100) according to any one of claims 6 to 8, **characterized in that**
the electrical heating device (104) is disposed upstream from a heating storage unit or the heat storage unit, and **that**
the furnace is configured to direct the high-temperature gas from the electrical heating device (104) through the heat storage unit and into the radiant chamber (108) for heating the radiating unit.

10. The industrial furnace (100) according to any one of the preceding claims, **characterized in that**
the furnace further comprises a dust injection unit (120) configured to introduce particles into the high-temperature gas stream, preferably the dust injection unit (120) is fluidly coupled to the tubing elements (110) or tubing elements (110).

11. The industrial furnace (100) according to any one of claims 1 to 10,
**characterized in that**
the radiating unit (106) comprises a porous structure configured to allow the passage of the high-temperature gas stream, preferably the porous structure comprises a ceramic foam or a ceramic honeycomb material, or
the radiating unit (106) comprises a wall structure configured to get heated by the high-temperature gas stream flowing along either one or both sides of the wall, preferably the wall structure comprises refractory materials.

12. The industrial furnace (100) according to any one of claims 1 to 11,
**characterized in that**
the radiating unit comprises a tubular (cylindrical) structure configured to get heated by the passage of the high-temperature gas stream through the tubular the tubular structure and/or around its exterior.

13. The industrial furnace (100) according any one of the preceding claims, **characterized in that**
the furnace (100) further comprises a recirculation conduit (138) configured to guide a portion of the gas stream (124) back to the electrical heating device (104).

14. A method (200) for performing industrial processes, in particular using the industrial furnace (100) according to any one of the preceding claims, the method comprising the steps of:
- providing (202) an industrial furnace (100), preferably according to any one of the preceding claims, wherein the industrial furnace is configured to generate a high-temperature gas stream using an electrical heating device;
- introducing (204) a feedstock into said furnace;
- subjecting (206) said feedstock to a high-temperature industrial process; and
- controlling (208) the operational parameters of said furnace to sustain the desired high temperatures required for the industrial process.

15. The method (200) according to claim 14,
**characterized in that**
the method further comprises the step of storing (210) heat energy generated by the heating device in a heat storage unit (120), and/or the step of pre-heating (212) the feedstock prior introducing the same into the industrial furnace.
